# EUROPEAN PATENT APPLICATION

(11) **EP 1 632 730 A2**
(43) Date of publication of application: **08.03.2006**
(21) Application number: 05019010.7
(22) Date of filing: 01.09.2005
(51) Int. Cl.: F24F 12/00, F24F 11/00

(54) **Ventilator and air conditioner having the same**

(30) Priority: 03.09.2004 JP 2004257295
(71) Applicant: SANYO ELECTRIC CO., LTD., Moriguchi-shi, Osaka (JP)
(72) Inventor: Fukushima, Toshio, Ota-shi Gunma (JP); Dobashi, Mitsuhiro, Oizumi-machi Ora-gun Gunma (JP); Tamura, Takaaki, Ora-gun Gunma (JP); Takahashi, Kazuo, Ota-shi Gunma (JP); Nakayama, Toshio, Kiryu-shi Gunma (JP); Yamada, Wazou, Ora-gun Gunma (JP)
(74) Representative: Glawe, Delfs, Moll

(57) **Abstract**

A ventilator (50) havinganairsupplyfan (55) for supplying outdoor air into a room, an air exhaust fan (63) for exhausting indoor air to the outside of the room, and a total heat-exchanging element (53) for heat-exchanging the outdoor air and the indoor air, characterized by comprising a control unit (45) for controlling the supply amount of the outdoor air supplied by the air supply fan (55) so that the total heat-exchanging element (53) is heated by heat of the indoor air exhausted by the air exhaust fan (63) when the temperature of the outdoor air is equal to a predetermined temperature or less, thereby preventing the total heat-exchanging element (53) from being frozen. An air conditioner having the ventilator (5).

## Description

### BACKGROUND OF THE INVENTION

### 1. Field of the Invention

The present invention relates to a ventilator having a total heat exchanging element and an air conditioner having the ventilator.

### 2. Description of the Related Art

When a room is kept closed for a long term, indoor air becomes tainted. From this viewpoint, a ventilator for taking outside fresh air into a room for ventilation is provided. As this type of ventilator has been proposed a ventilator having a total heat-exchanging element (total enthalpy heat exchanger) for heat-exchanging indoor air being discharged to the outside and outdoor air being taken into the room so that the temperature of the room is not so greatly varied (for example, JP-A-2001-235200).
Furthermore, when an air conditioner having a compressor, a heat-source side heat exchanger and a use-side heat exchanger is operated, the room is normally kept closed. Therefore, there is also known an air conditioner having the ventilator described above in which not only the room is air-conditioned, but also the room is ventilated.

According to the ventilator described above, In a case where ventilation is carried out under the state that the outdoor air temperature is low (for example, below zero), if the outdoor air of low temperature is continued to be supplied to the total heat exchanger, the indoor air is cooled by the outdoor air, and dew condensation occurs at the inlet port of the total heat-exchanging element for the indoor air, so that condensed water may be frozen to close the inlet port of the total heat-exchanging element for indoor air. Under the state that the indoor-air inlet port of the total heat-exchanging element is closed as described above, a required amount of ventilation is not achieved, and also the air flow pressure applied to the total heat-exchanging element is increased, so that the total heat-exchanging element may be broken.

In order to overcome the above disadvantage, it may be considered that the freezing of the indoor-air inlet port of the total heat-exchanging element is prevented by heating the low-temperature outdoor air with a heater or the like and supplying the air thus heated into the total heat-exchanging element. However, in this case, another heat source is needed, and thus the ventilator is complicated, so that an extra energy cost is needed.

### SUMMARY OF THE INVENTION

Therefore, an object of the present invention is to provide a ventilator in which the freezing of an indoor-air inlet port of a total heat-exchanging element can be suppressed without providing any new heat source, and an air conditioner having the ventilator.

In order to attain the above object, According to a first aspect of the present invention, a ventilator (50) having an air supply fan (55) for supplying outdoor air into a room, an air exhaust fan (63) for exhausting indoor air to the outside of the room, and a total heat-exchanging element (53)for heat-exchanging the outdoor air and the indoor air, is characterized by comprising a control unit (45) for controlling the supply amount of the outdoor air supplied by the air supply fan (55) so that the total heat-exchanging element (53) is heated by heat of the indoor air exhausted by the air exhaust fan (63) when the temperature of the outdoor air is equal to a predetermined temperature orless,thereby preventingthetotalheat-exchanging element (53) from being frozen.

In the above ventilator (50), the control unit (45) changes an operation time of the air supply fan (55) in accordance with the temperature of the outdoor air.

In the above ventilator (50), the control unit (45) has plural intermittent operation modes among which the operation time of the air supply fan (55) over a predetermined unit time is set to different values, selects an intermittent operation mode meeting the temperature of the outdoor air from the plural intermittent operation modes and operates the air supply fan in the intermittent operation mode thus selected.

In the above ventilator (50), the control unit (45) changes an operation frequency of the air supply fan in accordance with the temperature of the outdoor air.

In the above ventilator (50), the control unit (45) operates the air exhaust fan (63) while keeping the air exhaust fan to a predetermined air exhaust amount.

According to a second aspect of the present invention, an air conditioner (10) including an air conditioner main body (13A) suspended from a ceiling, and a ventilator (50) integrated with the air conditioner main body (13A), the ventilator (50) having an air supply fan (55) for supplying outdoor air into a room, an air exhaust fan (63) for exhausting indoor air to the outside of the room, and a total heat-exchanging element (53) for heat-exchanging the outdoor air and the indoor air, is characterized by comprising a control unit (45) for controlling the supply amount of the outdoor air supplied by the air supply fan (55) so that the total heat-exchanging element (53) is heated by heat of the indoor air exhausted by the air exhaust fan (63) when the temperature of the outdoor air is equal to a predetermined temperature or less, therebypreventingthetotalheat-exchanging element (53) from being frozen.

### BRIEF DESCRIPTION OF THE DRAWINGS

Fig. 1 is a refrigerant circuit diagram showing an embodiment of an air conditioner according to the present invention;
Fig. 2 is a perspective view showing a total heat-exchanging element;
Fig. 3 is a perspective view showing a user-side unit of the air conditioner which is viewed from the lower side;
Fig. 4 is a cross-sectional view of the use-side unit of the air conditioner;
Fig. 5 is a plan view showing the use-side unit of the air conditioner; and
Fig. 6 is a control flowchart showing an intermittent operation control of an air supply fan by a controller.

### DETAILED DESCRIPTION OF THE PREFERRED EMBODIMENT

A preferred embodiment according to the present invention will be described hereunder with reference to the accompanying drawings.

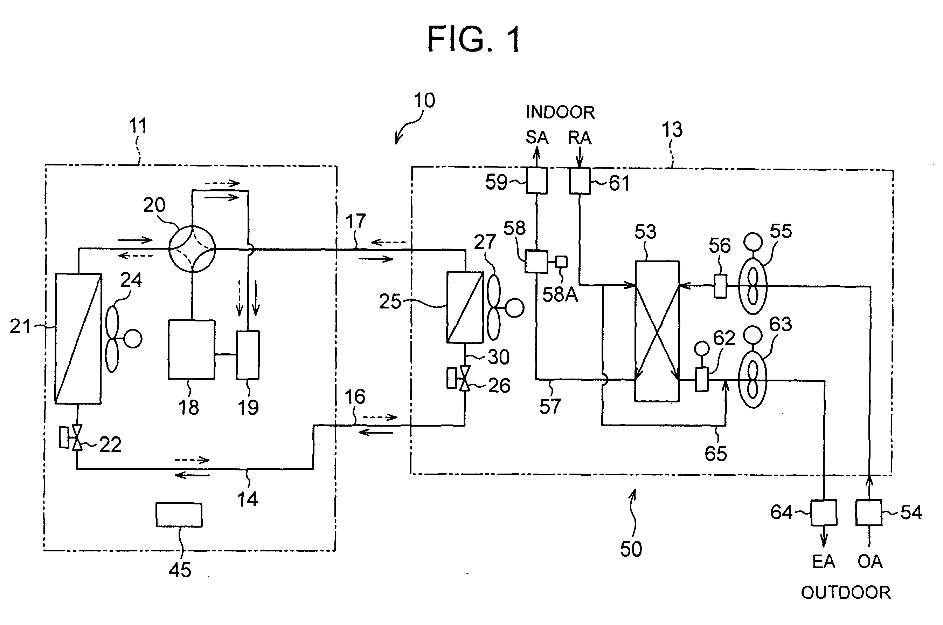

Fig. 1 is a refrigerant circuit showing an embodiment of an air conditioner according to the present invention. In Fig. 1, reference numeral 10 shows an air conditioner, and the air conditioner 10 includes a heat-source side unit 11 and a use-side unit 13. A refrigerant pipe 14 of the heat-source side unit 11 and a refrigerant pipe 30 of the use-side unit 13 are connected to each other through a refrigerant pipe (liquid pipe) 16 and a refrigerant pipe (gas pipe) 17. For example, the heat-source side unit 11 is disposed outdoors and the use-side unit 13 is disposed in a room to be air-conditioned.

The heat-source side unit 11 includes a capacitance-variable type compressor 18, an accumulator 19, a four-way valve 20, a heat-source side heat exchanger 21 and an electrically-driven (motor-driven) expansion valve 22. The compressor 18 is disposed in the refrigerant pipe 14, the accumulator 19 is disposed at the suction side of the compressor 18 and the four-way valve 20 is disposed at the discharge side of the compressor 18. The heat-source side heat exchanger 21 and the electrically-driven expansion valve 22 are connected to the four-way valve 20 through the refrigerant pipe 14. Furthermore, the heat-source side unit 11 is equipped with a heat-source side air blower 24 for blowing air to the heat-source side heat exchanger 21.

The use-side unit 13 is equipped with a use-side heat exchanger 25 and an electrically-driven (motor-driven) expansion valve 26. The use-side heat exchanger 25 is disposed in the refrigerant pipe 30, and the electrically-driven expansion valve 26 is disposed in the neighborhood of the use-side heat exchanger 25 in the refrigerant pipe 30. The opening degree of the electrically-driven expansion valve 26 is adjusted in accordance with an air-conditioning load. Furthermore, the use-side unit 13 is equipped with a use-side air blower 27 for blowing air to the use-side heat exchanger 25. Air is heat-exchanged with refrigerant in the use-side heat exchanger 25, and then blown out to the room to be air-conditioned. The use-side unit 13 is equipped with a ventilator 50 for ventilating the room. The ventilator 50 is integrally accommodated in the housing of the use-side unit 13 in which various kinds of equipment 25, 26, 27, etc. for air-conditioning.

In the air conditioner 10 thus constructed, a solid-line arrow shows the flow of refrigerant under heating operation. Gas refrigerant discharged form the compressor 18 flows through a four-way valve 20 into the use-side heat exchanger 25, and it is condensed and liquefied in the use-side heat exchanger 25 to heat the room. The liquid refrigerant is passed through an electrically-driven expansion valve 26, reduced in an electrically-driven expansion valve 22, evaporated in the heat-source side heat exchanger 21, passed through the four-way valve 20 and the accumulator 19 and then returned to the compressor 18.

A broken-line arrow shows the flow of the refrigerant under cooling operation. Under this state, gas refrigerant discharged from the compressor 18 passes through the four-way valve 20 and flows into the heat-source side heat exchanger 21 to be condensed, and then the refrigerant thus condensed is passed through the electrically-driven expansion valve 22, reduced in the electrically-driven expansion valve 26 of the use-side unit 13 and then flows into the use-side heat exchanger 25. Then, the refrigerant is evaporated in the use-side heat exchanger 25 to cool the room. The refrigerant evaporated and gasified in the use-side heat exchanger 25 is returned through the four-way valve 20 of the heat-source side unit 11 and the accumulator 19 into the compressor 18.

The heat-source side unit 11 is provided with a controller as a control unit for controlling the overall driving operation of the air conditioner 10. Here, the controller 45 may be provided to the use-side unit 13, or it may be provided separately from the units 11 and 13 (for example, as a remote controller).

Next, the ventilator 50 of the use-side unit 13 will be described.

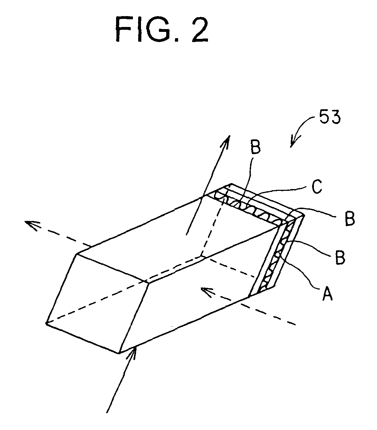

The ventilator 50 is constructed to be equipped to the total heat-exchanging element 53. The total heat-exchanging element 53 is designed as follows. As shown in Fig. 2, a flat sheet B is put on a first corrugated sheet which is folded in the form of bellows, and then a second corrugated sheet C which is folded in the form of bellows in a different folding direction to that of the first corrugated sheet A is put on the flat sheet B. This laminate structure comprising the first corrugated sheet A, the flat sheet B and the second corrugated sheet C is repeated to thereby form the total heat-exchanging element 53. The total heat-exchanging element 53 is supplied with outdoor air and also with exhaust air (indoor air) from the room being air-coriditioned as shown in Fig. 1. The indoor air and the outdoor air thus supplied to the total heat-exchanging element 11 are heat-exchanged with each other, and then the outdoor air is supplied to the room being air-conditioned while the indoor air is exhausted to the outside.

That is, when the ventilator 50 carries out ventilation operation while the air conditioner carries out cooling operation, the total heat exchanger 53 carries out the heat-exchange between warm outdoor air and cold exhaust air in the room to cool the outdoor air, and supplies the outdoor air thus cooled into the room. Furthermore, when the ventilator 50 carries out the ventilation operation while the air conditioner carries out heating operation, the total heat-exchanging element 53 carries out the heat-exchange between cold outdoor air and warm exhaust indoor air to heat the outdoor air, and supplies the outdoor air thus heated into the room. Accordingly, the air-conditioning performance can be suppressed from being lowered.

After the outdoor air is passed through an air supply duct 54 and an air supply fan 55, the outdoor air reaches the total heat-exchanging element 53 through an outdoor air filter 56. The outdoor air is passed through an air supply flow path 57, a humidifier 58 and an air blow-out louver 59 and blown out to the room to be air-conditioned. A humidifying tank 58A is connected to the humidifier 58, and if water is directly supplied to the tank, humidifying water is successively supplied into the humidifier 58.

The indoor air from the room to be air-conditioned passes through a suction grill 61 and reaches the total heat-exchanging element 53. The indoor air is further passed through the total heat-exchanging element 53 and discharged through a dumper 62, an exhaust fan 63 and a discharge duct 64 to the outside. The dumper 62 freely blocks off the air flow path. When the dumper 62 blocks off the air flow path, the indoor air passed through the suction grill 61 bypasses the total heat-exchanging element 53 and reaches the exhaust fan 63 through a normal ventilation flow path 65. Then, the indoor air is discharged through the discharge duct 64 to the outside.

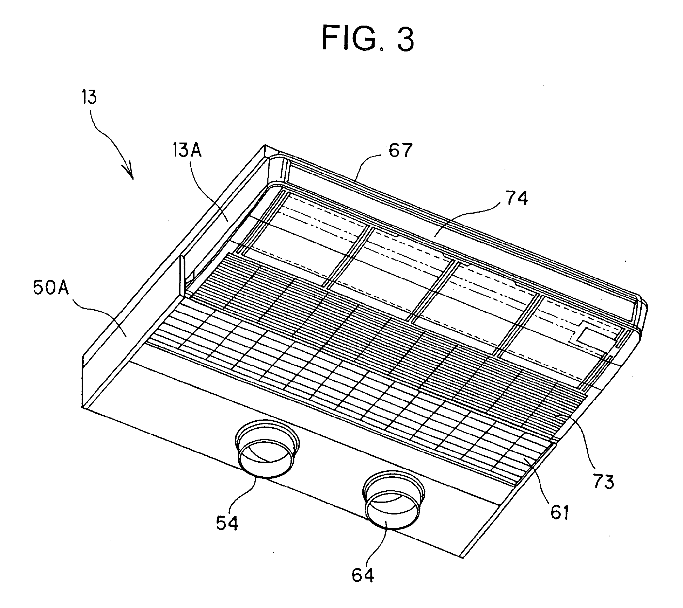

In this embodiment, the use-side unit 13 of the air conditioner 10 comprises an air conditioner main body 13A suspended from the ceiling, and an outdoor-air temperature adjusting ventilator main body 50A which is integrally joined to the rear portion of the air conditioner main body 13A as shown in Fig. 3.

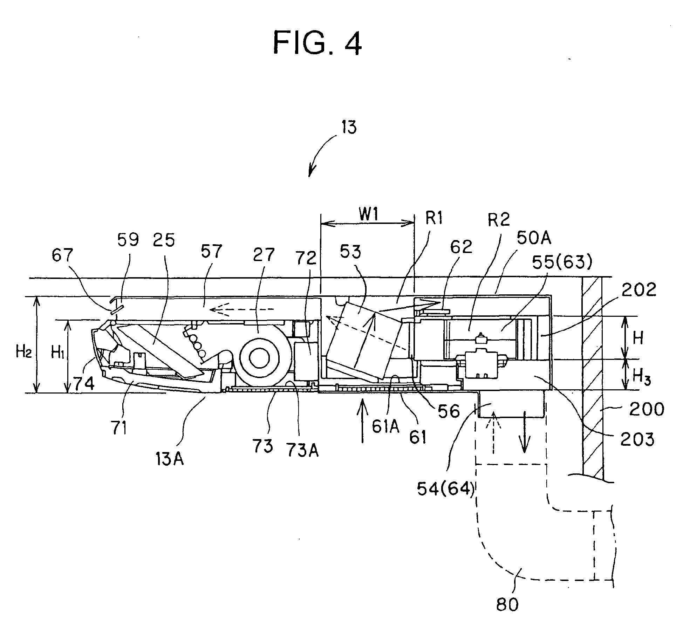

The air conditioner main body 13A includes the use-side heat exchanger 25 described above, a use-side air blower 27, a drain pan 71, an electrical equipment box 72, etc. disposed therein, and a filter 73A is disposed in the suction grill 73 as shown in Fig. 4. When the air conditioner main body 14A is operated, indoor air is sucked through the suction grill 73 into the air conditioner main body 14A, the indoor air thus sucked passes through the use-side air blower 27 and reaches the use-side heat exchanger 25. The indoor air is heat-exchanged with the refrigerant in the use-side heat exchanger 25, and then blown out through an air blow-out port 74 into the room to be air-conditioned.

The total heat-exchanging element 53, the air supply fan 55, the exhaust fan 63, etc. described above are disposed in the ventilator main body 50A, and a filter 61A is disposed in the suction grill 61. When the ventilator main body 50A is driven, the indoor air is sucked through the suction grill 61, and reaches the total heat-exchanging element 53. In the total heat-exchanging element 53, the indoor air is heat-exchanged with the outdoor air, and then discharged through the exhaust fan 63 to the outside. On the other hand, the outdoor air passes through the air supply fan 55 and reaches the total heat-exchanging element 53. In the total heat-exchanging element 53, the outdoor air is heat-exchanged with the indoor air, passed through the air supply flow path 57 and the air blow-out louver 59, and then blown out from the air blow-out port 67 to the room to be air-conditioned.

According to this embodiment, the air blow-out ports 74 and 67 of the main bodies 13A and 50A are formed independently of each other. The full width of the air blow-out port 67 is formed to be substantially equal to the full width of the air blow-out port 74 of the air conditioner main body 13A as shown in Fig. 3, and the respective air blow-out ports 74 and 67 are disposed in proximity to each other. Air blown out from the air blow-out port 74 of the air conditioner main body 14A and air blown out from the air blow-out port 67 of the ventilator main body 50A are freely mixed with each other at the exit of each of the air blow-out ports 74 and 67.

As shown in Fig. 4, the height H of the air conditioner main body 13A is set to be lower than the height H of the ventilator main body 50A, and the air supply path 57 of the ventilator main body 50A is formed at the upper side of the lower air conditioner main body 13A. The total height of the height of the air supply flow path 57 and the height H1 of the air conditioner main body 13A is set to be substantially equal to the height H2 of the ventilator main body 50A.

Furthermore, the ventilator main body 50A contains therein an accommodating portion R1 for the total heat-exchanging element 53 and an accommodating portion R2 for the air supply fan 55 and the exhaust fan 63 so that the accommodating portions R1 and R2 are juxtaposed with each other in the depth direction of the ventilator main body 50A, and the air supply duct 54 and the air exhaust duct 64 are fixed to the lower portion of the accommodating portion R2 by plural screws (not shown) . An elbow 80 is provided to each of the air supply duct 54 and the air exhaust duct 64, and the ducts are drawn to the rear side through the elbows 80. Accordingly, not only a duct drawing work can be easily performed, but also the air conditioner 13 can be set up in proximity to the wall surface 200, so that the arrangement of the air conditioner looks nice.

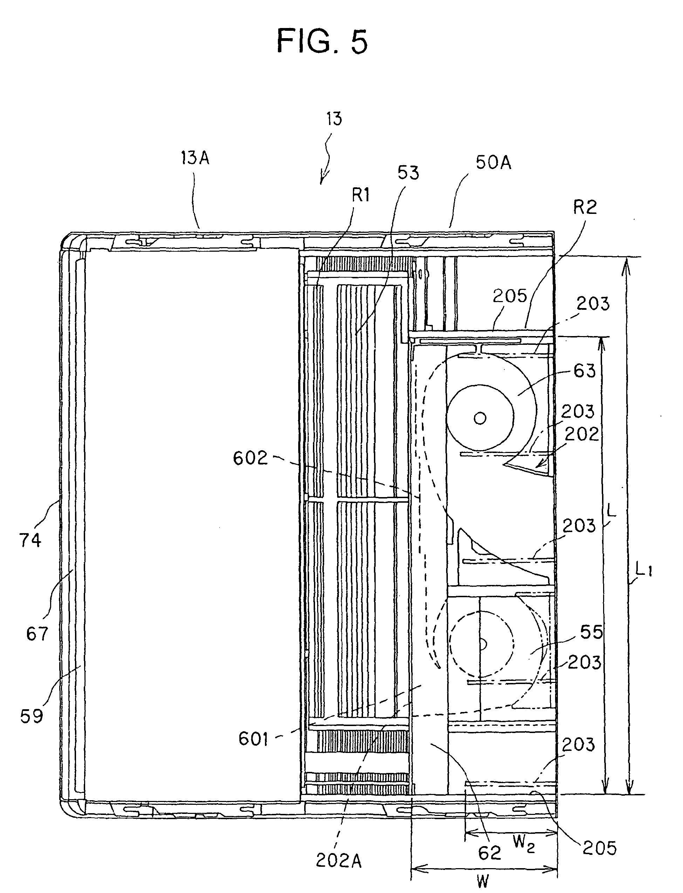

As shown in Fig. 5, an air flow path forming member 202 of resin foam which has a width W, a length L and a height H (Fig. 4) is disposed in the accommodating portions R2 for the air supply fan 55 and the air exhaust fan 63, and the air supply fan 55 and the air exhaust fan 63 are collectively accommodated in the air flow path forming member 202. The air flow path forming member 202 is mounted on plural mount plates 203 which are fixed so as to be spaced from one another at intervals in the direction of the length L and each of which has a length W2 and a height H3 (Fig. 4) while both the end portion of each mount plate 203 is regulated by regulating members 205. These mount plates 203 also serve as partition plates for sectioning the air suction path and the air exhaust path of the air supply fan 55 and the air exhaust fan 63. Furthermore, in order to regulate the lateral position of the air flow path 202, a resin foam element casing (not shown) having a width W1 (Fig. 4), a length L1 and a height H2 (Fig. 4) is engagedly fitted in the accommodating portion R1 for the total heat-exchanging element 53, and the total heat-exchanging element 53 is held in the casing.

The face 202A of the air flow path forming member 202 which confronts the total heat-exchanging element 53 comprises an opening portion 601 corresponding to the air blow-out port of the air supply fan 56 and an air guiding portion 602 that intercommunicates with the opening portion 601 and guides air blown out from the air supply fan 56 to the total heat-exchanging element 53 over the full width thereof. In this embodiment, the total heat-exchanging element 53 is disposed to face the opening portion 601 and the air guide portion 602 which are formed in the air flow path forming member 202. Therefore, a large amount of air from the air supply fan 56 is passed through the opening portion 601, and then guided to the air guide portion 602 to substantially uniformly distribute the air through the air guide portion 602 to the total heat-exchanging element 53 over the full width thereof.

When the temperature of the outdoor air is low, the indoor air is cooled by the outdoor air if the outdoor air of low temperature is continued to be supplied to the total heat-exchanging element 53, so that dew condensation occurs at the indoor air inlet port of the total heat-exchanging element 53 and condensed water is apt to be frozen.

Therefore, when the temperature of the outdoor air is equal to a predetermined temperature (for example, 0°C) or less, in order to prevent the total heat-exchanging element 53 from freezing, the ventilator 50 controls the supply amount of outdoor air from the air exhaust fan 63 so that the total heat-exchanging element 53 is warmed by the heat of the indoor air exhausted from the air exhaust fan 63. Specifically, the temperature range of the outdoor air temperature is sectioned into plural temperature areas (area A to area D), and when the outdoor air temperature belongs to any one of these temperature areas, the ventilator 50 controls the air supply fan 55 so that the air supply fan 55 is intermittently operated in accordance with the corresponding temperature area. In this case, the air exhaust fan 63 is controlled to be continuously operated while the air exhaust amount is kept to a predetermined (constant or variable) amount irrespective of the temperature area, whereby the total heat-exchanging element 53 is warmed by the heat of the indoor air exhausted from the air exhaust fan.

The plural areas (area A to area D) described above are set in accordance with the probabilities that dew condensation occurs in the indoor air and thus the total heat-exchanging element 53 is frozen when the outdoor air is supplied to the total heat-exchanging element 53. The area A corresponds to an area where there is little probability that the total heat-exchanging element 53 is frozen. In this embodiment, the area A is set to a range satisfying the outdoor air temperature > 0°C. Furthermore, the region from the area B to the area D correspond to a region where the total heat-exchanging element 53 may be frozen. As the area is shifted from the area B to the area D, the probability that the total heat-exchanging element 53 is frozen is increased. In this embodiment, the area B is set to a range satisfying -5°C < outdoor air temperature ≤ 0°C, the area C is set to a range satisfying -10°C < outdoor air temperature ≤ -5°C, and the area D is set to a range satisfying -15°C < outdoor air temperature ≤ -10°C. The method of setting these areas A to D (the number of the areas, the temperature ranges, etc.) may be properly altered.

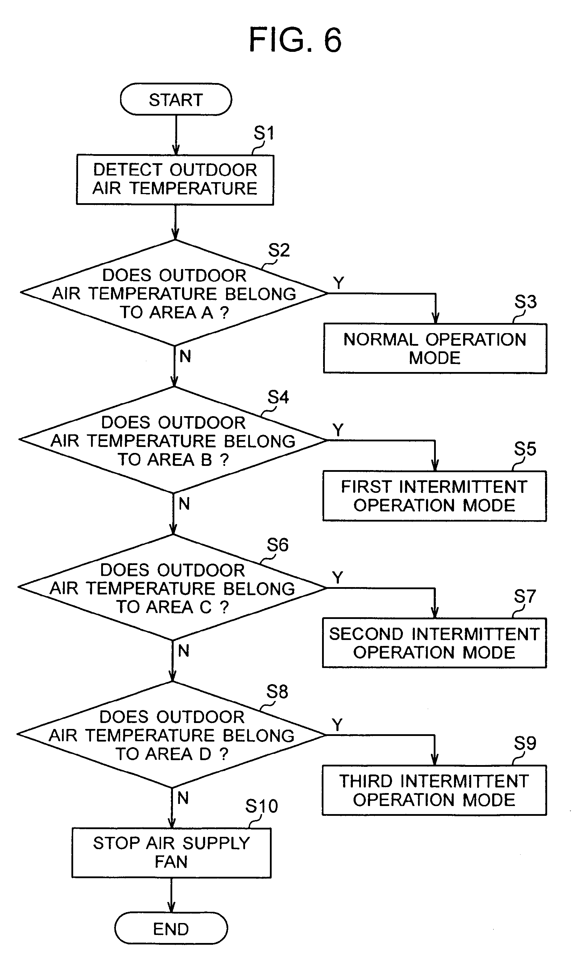

The control of driving the air supply fan 55 is carried out by the controller 45. The control operation of the air supply fan 55 by the controller 45 will be described with reference to a control flowchart of Fig. 6.

First, the controller 45 detects the outdoor air temperature (step S1), and judges whether the outdoor air temperature thus detected belongs to the area A or not (step S2). If the outdoor air temperature belongs to the area A, there is no probability that the total heat-exchanging element 53 is frozen even when the outdoor air is continued to be supplied to the total heat-exchanging element 53, and thus the controller 45 controls the air supply fan 55 to carry out a normal operation (step S3). In this case, the normal operation means an operation under which the air supply fan 55 operates continuously during the operation of the air conditioner 10. On the other hand, when the outdoor air temperature does not belong to the area A, that is, when the outdoor air temperature is equal to 0°C or less, the controller 45 shifts the processing to step S4 to prevent freezing of the total heat-exchanging element 53.

Subsequently, the controller 45 judges whether the outdoor air temperature belongs to the area B (step S4). Here, if it is judged whether the outdoor air temperature belongs to the area B, the controller 45 controls the air supply fan 55 to carry out a first intermittent operation mode in order to prevent water flowing in the total heat-exchanging element 53 from being frozen by the low-temperature (0°C or less) outdoor air (step S5).

In this first intermittent operation mode, even when the outdoor air belonging to the area B is supplied to the total heat-exchanging element 53 under the state that the indoor air under heating operation (for example, room temperature of 24°C) is continuously supplied to the total heat-exchanging element 53, the operation time and the stop time of the air supply fan 55 over a predetermined unit time (for example, 600 seconds) are settled so that the total heat-exchanging element 53 is not frozen. In this embodiment, the operation time and the stop time of the air supply fan 55 are set so that the rates thereof are substantially equal to each other (for example, the air supply fan 55 is operated for 300 seconds and stopped for 300 seconds) . On the other hand, if it is judged that the outdoor air does not belong to the area B, the processing is shifted to step S6.

Subsequently, the controller 45 judges whether the outdoor air temperature belongs to the area C (step S6). In this judgment, if the outdoor air temperature belongs to the area C, the controller 45 controls the air supply fan 55 in a second intermittent mode (step S7).

In this second intermittent mode, even when the outdoor air belonging to the area C is supplied to the total heat-exchanging element 53, the operation time and the stop time of the air supply fan 55 over a predetermined unit time (for example, 600 seconds) are settled so that the total heat-exchanging element 53 is not frozen. In this second intermittent operation mode, the operation time of the air supply fan 55 over the predetermined unit time is set to be shorter than that in the first intermittent operation mode. For example, in this embodiment, the air supply fan 55 is operated for 200 seconds, and stopped for 400 seconds. On the other hand, if it is judged that the outdoor air temperature does not belong to the area C, the processing is shifted to step S8.

Subsequently, the controller 45 judges whether the outdoor air temperature belongs to the area D (step S8) In this judgment, if the outdoor air temperature belongs to the Darea, the controller 45 controls the air supply fan 55 in a third intermittent operation (step S9).

In this third intermittent operation mode, even when the outdoor air belonging to the D area is supplied to the total heat-exchanging element 53, the operation time and the stop time of the air supply fan 55 over the predetermined unit time (for example, 600 seconds) are settled so that the total heat-exchanging element 53 is not frozen, and the operation time of the air supply fan 55 over the predetermined unit time is set to be shorter than that in the second intermittent operation mode. In this embodiment, the air supply fan 55 is operated for 100 seconds, and stopped for 500 seconds.

Here, in the first to third intermittent operation modes, the operation of the air supply fan 55 is not merely stopped so as to prevent the total heat-exchanging element 53 from being frozen. The operation time of the air supply fan 55 is settled not only for the purpose of preventing the total heat-exchanging element 53 from being frozen, but also in consideration of an operation time needed to secure a ventilation amount which is the original function of the ventilator 50. Accordingly, even in the third intermittent operation under which the operation time of the air supply fan 55 is shortest, the ventilation amount is secured by the operation time of the third intermittent operation. In this case, if it is judged that the outdoor air temperature does not belong to the area D, the processing is shifted to step S10.

If the outdoor air temperature does not belong to any one of the areas A to D (in this embodiment, the outdoor air temperature is equal to -15°C or less), the operation of the air supply fan 55 is stopped (step S10). Even in this case, the exhaust fan 63 is also continuously operated. Accordingly, even when the air supply fan 55 is stopped, for example, the air flowing from the air supply duct 54 to the air supply flow path 57 is passed through the air blow-out louver 59 and sucked into the room being air conditioned under negative pressure, so that the ventilation of the room being air conditioned is carried out and thus the indoor air of the room can be kept clean.

In this embodiment, for example when the total heat-exchanging element 53 is apt to be frozen by the low-temperature outdoor air below the freezing point, the air supply fan 55 is intermittently operated to temporarily stop the supply of the outdoor air to the total heat-exchanging element 53, and also the warmed indoor air is continuously exhausted through the total heat-exchanging element 53. Therefore, the total heat-exchanging element 53 is warmed and thus it can be prevented that dew condensation occurs in the indoor air and the condensed water is frozen.

Furthermore, according to this embodiment, the ventilator 50 is provided with the plural intermittent operation modes among which the operation of the air supply fan 55 over the predetermined unit time is set to different values. Any one of these intermittent operation modes is selected an intermittent operation mode meeting the outdoor air temperature, and the air supply fan 55 is intermittently operated in the selected intermittent operation mode This intermittent operation mode is set not only to prevent the freezing of the total heat-exchanging element 53, but also to secure a required ventilation amount of the ventilator 50. Therefore, the freezing at the indoor inlet port of the total heat-exchanging element 53 can be suppressed while the required ventilation amount is secured.

Still furthermore, in this embodiment, it is unnecessary to provide another heat source such as a heater or the like. Therefore, the ventilator 50 can be simplified, and extra energy cost can be prevented.

The present invention is not limited to the above embodiment, and various modifications may be made without departing from the subject matter of the present invention. For example, in the above embodiment, the controller 45 reduces the supply amount of the outdoor air to the total heat-exchanging element 53 by intermittently operate the air supply fan 55, thereby preventing the total heat-exchanging element 53 from being frozen. However, the supply amount of the outdoor air to the total heat-exchanging element 53 may be reduced by lowering the operation frequency of the air supply fan 55, thereby preventing freezing of the total heat-exchanging element 53.

Furthermore, the controller 45 carries out the first to third intermittent operation modes, however, the present invention is not limited to this embodiment. For example, the operation control of the air supply fan may be more minutely carried out by using four or more intermittent operation modes. Furthermore, in this embodiment, the exhaust fan 63 is controlled to be continuously operated under the state that the air exhaust fan 63 is kept to a predetermined air exhaust amount. However, the present invention is not limited to this embodiment. The air exhaust fan 63 may be controlled so that the operation thereof may be temporarily stopped to the extent that the freezing of the total heat-exchanging element 53 is prevented.

## Claims

1. A ventilator (50) having an air supply fan (55) for supplying outdoor air into a room, an air exhaust fan (63) for exhausting indoor air to the outside of the room, and a total heat-exchanging element (53) for heat-exchanging the outdoor air and the indoor air, **characterized by** comprising a control unit (45) for controlling the supply amount of the outdoor air supplied by the air supply fan (55) so that the total heat-exchanging element (53) is heated by heat of the indoor air exhausted by the air exhaust fan (63) when the temperature of the outdoor air is equal to a predetermined temperature or less, thereby preventing the total heat-exchanging element (53) from being frozen.

2. The ventilator (50) according to claim 1, wherein the control unit (45) changes an operation time of the air supply fan (55) in accordance with the temperature of the outdoor air.

3. The ventilator (50) according to claim 1, wherein the control unit (45) has plural intermittent operation modes among which the operation time of the air supply fan (55) over a predetermined unit time is set to different values, selects an intermittent operation mode meeting the temperature of the outdoor air from the plural intermittent operation modes and operates the air supply fan in the intermittent operation mode thus selected.

4. The ventilator (50) according to claim 1, wherein the control unit (45) changes an operation frequency of the air supply fan in accordance with the temperature of the outdoor air.

5. The ventilator (50) according to claim 1, wherein the control unit (45) operates the air exhaust fan (63) while keeping the air exhaust fan to a predetermined air exhaust amount.

6. An air conditioner (10) including an air conditioner main body (13A) suspended from a ceiling, and a ventilator (50) integrated with the air conditioner main body (13A), the ventilator (50) having an air supply fan (55) for supplying outdoor air into a room, an air exhaust fan (63) for exhausting indoor air to the outside of the room, and a total heat-exchanging element (53)for heat-exchanging the outdoor air and the indoor air, **characterized by** comprising a control unit (45) for controlling the supply amount of the outdoor air supplied by the air supply fan (55) so that the total heat-exchanging element (53) is heated by heat of the indoor air exhausted by the air exhaust fan (63) when the temperature of the outdoor air is equal to a predetermined temperature orless,thereby preventingthetotalheat-exchanging element (53) from being frozen.
